# NOUVEAU FASCICULE DE BREVET EUROPEEN

(11) **EP 0 493 168 B2**
(45) Date de publication et mention de la décision concernant l'opposition: **17.01.2001**
(45) Mention de la délivrance du brevet: 14.06.1995
(21) Numéro de dépôt: 91403354.3
(22) Date de dépôt: 11.12.1991
(51) Int. Cl.: C08K 5/54, C08L 31/04, C08L 33/04, C04B 28/02

(54) **Poudres redispersables de polymères vinyliques**
Redispergierbare Pulver aus Vinylpolymeren
Redispersable powders of vinyl polymers

(30) Priorité: 21.12.1990 FR 9016078
(43) Date de publication de la demande: 01.07.1992
(73) Titulaire: RHODIA CHIMIE, 92408 Courbevoie Cédex (FR)
(72) Inventeur: Colombet, Jean-François, F-92500 Rueil Malmaison (FR); Thiebaut, Bruno, F-94230 Cachan (FR)
(74) Mandataire: Dubruc, Philippe

(56) Documents cités:
- EP-A- 0 078 449
- EP-A- 0 134 451
- EP-A- 0 149 098
- EP-A- 0 287 085
- EP-A- 0 301 531
- EP-A- 0 477 900
- DE-A- 3 704 400
- CS-B-0192119 & HCAPLUS (A No.1983;131 344)
- SU-A-0996377 & WPIDS (A No. 83-843080 [5a])

## Description

La présente invention concerne l'utilisation de silicone dans des compositions pulvérulentes redispersables dans l'eau à base d'un polymère vinylique et/ou acrylique insoluble dans l'eau. L'invention concerne également l'utilisation de ces poudres dans l'industrie du bâtiment.

On connaît déjà des poudres redispersables qui sont obtenues par pulvérisation - séchage de dispersions de polymères vinyliques et/ou acryliques, notamment de dispersions de polymères d'esters vinyliques.

Pour parvenir à obtenir des poudres ne s'agglomérant pas au cours du stockage sous l'effet de la pression et de la température et convenablement redispersables dans l'eau, on a coutume de leur adjoindre des quantités relativement importantes de substances inertes et de colloïdes protecteurs.

Les polymères vinyliques et/ou acryliques sont utilisés fréquemment comme adjuvants dans les compositions de liants minéraux hydrauliques pour en améliorer la mise en oeuvre et les propriétés après durcissement telles que l'adhésion sur divers substrats, l'étanchéité, la souplesse, les propriétés mécaniques. Les poudres redispersables présentent l'avantage par rapport aux dispersions aqueuses de pouvoir être pré-mélangées avec le ciment sous forme de compositions pulvérulentes prêtes à l'emploi utilisables par exemple pour la fabrication de mortiers et bétons destinés à être accrochés sur des matériaux de construction, ou pour la fabrication de mortiers-colles ou pour la réalisation d'enduits de protection et de décoration à l'intérieur ou à l'extérieur ou à l'extérieur des bâtiments.

On constate cependant une diminution de l'adhérence des revêtements durcis après immersion en milieu humide.

Pour empêcher l'agglomération des poudres redispersables de polymères sans nuire à l'adhésivité, il a été proposé d'ajouter aux dispersions, avant la pulvérisation, des produits de condensation mélamine-formaldéhyde-sulfonate (US-A-3784648) ou naphtalène-formaldéhyde-sulfonate (DE-A-3143070) et/ou des copolymères vinylpyrrolidone-acétate de vinyle (EP-A-0078449). EP 149098 décrit des compositions pulvérulentes obtenues par pulvérisation-séchage d'une dispersion d'un copolymère de chlorure de vinyle, d'éthylène et d'autres monomères contenant comme agent anti-mousse une silicone; ce document décrit le problème de l'altération des propriétés mécaniques entrainées par un stockage en conditions humides avant durcissement des liants hydrauliques. Ces substances hydrosolubles ne parviennent pas à améliorer la perte d'adhérence à l'état humide.

La présente invention a pour but l'utilisation d'au moins une silicone dans des poudres dispersables insolubles dans l'eau, stables au stockage sans agglomération pour améliorer l'adhérence après conditionnement humide des formulations de liants hydrauliques les contenant.

Selon l'invention, les compositions pulvérulentes dispersables de polymères filmogènes vinyliques et/ou acryliques insolubles dans l'eau sont caractérisées en ce qu'elles contiennent 0,5 à 20 parties en poids d'au moins une silicone pour 100 parties en poids du polymère filmogène.

Les polymères filmogènes insolubles dans l'eau sont représentés par les homopolymères et copolymères de monomères vinyliques et/ou acryliques ayant une température de transition vitreuse comprise entre environ, -20°C et +50°C, de préférence entre 0°C et 40°C. Ces polymères peuvent être préparés de manière connue en soi par polymérisation en émulsion de monomères à insaturation éthylénique à l'aide d'amorceurs de polymérisation et en présence d'agents émulsifiants et/ou dispersants usuels. La teneur en polymère dans la dispersion se situe généralement entre 10 et 70% en poids, plus spécifiquement entre 35 et 65% en poids.

A titre de monomères, on peut citer les esters vinyliques et plus particulièrement l'acétate de vinyle : les acrylates et méthacrylates d'alkyle dont le groupe alkyle contient de 1 à 10 atomes de carbone, par exemple les acrylates et méthacrylates de méthyle, éthyle, n-butyle, 2-éthylhexyle: les monomères vinylaromatiques en particulier le styrène. Ces monomères peuvent être copolymérisés entre eux ou avec d'autres monomères à insaturation éthylénique.

A titre d'exemples non limitatifs de monomères copolymérisables avec l'acétate de vinyle, et/ou les esters acryliques et/ou le styrène on peut citer l'éthylène et les oléfines comme l'isobutène ; les esters vinyliques d'acides monocarboxyliques saturés, ramifiés ou non, ayant de 1 à 12 atomes de carbone, comme le propionate, le « versatate » (marque déposée pour les esters d'acides ramifiés en C₈-C₁₂), le pivalate, le laurate de vinyle ; les esters d'acides insaturés mono- ou di-carboxyliques possédant 3 à 6 atomes de carbone avec les alcanols possédant 1 à 10 atomes de carbone, comme les maléates, fumarates de méthyle, d'éthyle, de butyle, d'éthylhexyle ; les monomères vinylaromatiques tels que les méthylstyrènes, les vinyltoluènes ; les halogénures de vinyle tels que le chlorure de vinyle, le chlorure de vinylidène, les dioléfines particulièrement le butadiène.

La silicone est choisie parmi les organosiliconates alcalins ou alcalinoterreux et les organopolysiloxanes liquides à température ambiante.

Les organosiliconates alcalins ou alcalino-terreux sont des produits connus dont la plupart sont disponibles dans le commerce. Les plus courants sont les méthylsiliconates de sodium ou de potassium à environ 30 à 60% d'extrait sec.

Les organosiliconates peuvent être préparés par exemple par hydrolyse des organosilanes correspondants présentant 3 groupes hydrolysables, tels que des atomes d'halogènes, des radicaux alcoxy, suivi d'une dissolution du produit obtenu dans une solution d'une base inorganique forte, dans des proportions telles qu'il y ait au moins un équivalent en base par atome de silicium (voir par exemple US-A-2 441 422, US-A-2 441 423 et US-A-2 507 200).

Les organopolysiloxanes sont également des produits connus. Le polymère peut être linéaire, cyclique ou ramifié et être soluble ou insoluble dans l'eau. Les radicaux organiques sont des radicaux hydrocarbonés monovalents ayant de 1 à 10 atomes de carbone. Le polymère peut en outre comprendre un ou plusieurs atomes d'hydrogène liés au silicium et/ou un ou plusieurs groupes hydroxyles et/ou alcoxyle. Les polymères linéaires sont constitués d'enchainements diorganosiloxy de formule T₂SiO dans laquelle les symboles T, identiques ou différents, représentent des radicaux hydrocarbonés ayant de 1 à 10 atomes de carbone, substitués ou non par des atomes d'halogène, des groupes cyano.

Les radicaux hydrocarbonés, représentés par les symboles T, englobent :
- les radicaux alkyles ayant de 1 à 10 atomes de carbone tels que les radicaux méthyle, éthyle, propyle, isopropyle, butyle, pentyle, hexyle, éthyl-2 hexyle, octyle, décyle.
- les radicaux cycloalkyles ayant jusqu'à 10 atomes de carbone tels que les radicaux cyclopentyle, cyclohexyle.
- les radicaux alcényles ayant de 2 à 4 atomes de carbone tels que les radicaux vinyle, allyle, butène-2 yle.
- les radicaux aryles mononucléaire ayant de 6 à 10 atomes de carbone tels que les radicaux phényle, tolyle, xylyle.

Les radicaux méthyle, phényle, vinyle sont les radicaux préférés.

Des exemples représentatifs de polymères organopolysiloxanes comprennent :
- des polymères α-ω bis (triorganosiloxy) diorganopolysiloxanes dont les radicaux organiques liés aux atomes de silicium sont choisis parmi les radicaux méthyle, vinyle, phényle ; par exemple des huiles α-ω bis (trimethylsiloxy) dimethyl polysiloxanes de viscosité de préférence 5 mPa.s à 10000 mP.s à 25°C.
- des polymères α-ω di (hydroxy) diorganopolysiloxanes bloqués à chaque extrémité de leur chaîne par un groupe hydroxyle, de viscosité de préférence 5m Pa.s à 5000 mPa.s à 25°C ; par exemple les huiles α-ω di (hydroxy) méthylphénylpolysiloxanes
- des polymères des types ci-dessus sous forme de gommes de viscosité supérieure à environ 500.000 mPa.s. Ces gommes étant utilisées sous forme d'émulsion aqueuse.
- des polymères organosiloxanes ramifiés (résines silicone) liquides à température ambiante, comportant un ou plusieurs motifs choisis parmi ceux de formule R₂SiO (motif D), RSiO_{1,5} (motif T) et SiO₂ - (motif Q) dans laquelle les radicaux R sont des radicaux alkyle ayant de 1 à 6 atomes de carbone.
- des polymères organohydrogenopolysiloxanes.

Les organosiliconates alcalins ou alcalinoterreux et les organopolysiloxanes liquides, linéaires cycliques ou ramifiés peuvent bien entendu être utilisés seuls ou en mélange entre eux. Il est également possible d'utiliser des mélanges comprenant un ou plusieurs organosiliconate(s) et un ou plusieurs organopolysiloxanes.

La silicone est présente dans les poudres conformes à l'invention en quantité comprise entre 0,5 et 20 % en poids par rapport au poids du polymère filmogène vinylique, de préférence au moins 1 %.

Les poudres dispersables peuvent en outre comprendre des additifs usuels issus de la fabrication des polymères ainsi que d'autres additifs usuels tels que colloïdes protecteurs et agents anti-mottants. La quantité de colloïde protecteur par exemple l'alcool polyvinylique ou le polyéthyleneglycol peut aller jusqu'à 15 % en poids par rapport au poids de polymère et la quantité d'agent anti-mottant est généralement comprise entre 1 et 20 % du poids total de la poudre. Les agents antimottants sont généralement des substances minérales ayant une dimension moyenne de particules comprise entre 0,01 et 50 µm Des exemples de tels agents sont les silicoaluminates, les silices, les argiles, le talc, le gypse et le carbonate de calcium.

La poudre dispersable est préparée par pulvérisation-sèchage d'une dispersion aqueuse du polymère vinylique et/ou acrylique. Selon le procédé conforme à l'invention on ajoute à la dispersion, avant pulvérisation, une silicone sous forme liquide en quantité comprise entre 0,5 et 20 parties en poids pour 100 parties en poids de polymère en dispersion. L'incorporation de la silicone dans la dispersion peut-être faite, le cas échéant, sous forme d'une solution aqueuse comme par exemple, le siliconate de métal alcalin ou alcalino-terreux ou sous forme d'une émulsion. La concentration en matières sèches du mélange prêt à sécher est préférentiellement comprise entre 30 et 42 % en poids.

Le séchage-pulvérisation peut s'effectuer de manière habituelle dans tout appareil connu tel que par exemple, une tour d'atomisation associant une pulvérisation réalisée par une buse ou une turbine avec un courant de gaz chaud. La température d'entrée du gaz chaud, qui est généralement de l'air, est préférablement comprise entre 103 et 115 C, et la température de sortie est préférablement comprise entre 55 et 65°C. Les agents anti-mottants peuvent être introduits dans l'appareil séparément de la dispersion.

Les compositions pulvérulentes obtenues sont stables au stockage ; elles peuvent être aisement redispersées dans l'eau et utilisées dans tous les domaines d'application connus. Elles conviennent tout particulièrement dans l'industrie du bâtiment comme additifs aux mélanges de liants minéraux hydrauliques pour la réalisation d'enduits de protection et de décoration, des mortiers-colles et des ciments-colles destinés à la pose de carrelages et de revêtements de sols. Elles s'avèrent particulièrement bien adaptées à la préparation de produits en poudre prêts à l'emploi à base de ciment ainsi que de plâtre.

Dans les exemples suivants, les parties et pourcentages sont exprimés en poids, sauf indication contraire.

### Exemple 1 :

A un latex copolymère acetate de vinyle-versatate de vinyle (extrait sec 45 % - TMFF = +5°C - viscosité Brookfied à 23°C - 50t/mn 500 mPa.s) on ajoute une huile dimethylpolysiloxane bloquée à chaque extrémité par un groupe trimethylsiloxyle et de viscosité 100 mPa.s à 25°C, en quantité de 3 % par rapport à la teneur en solides de la dispersion.

Le mélange est homogénéisé, dilué à 40 % de matières sèches puis envoyé dans une tour d'atomisation. La température de séchage est de 115°C à l'entrée de la tour et 60°C à la sortie. On introduit simultanément en continu dans le dispositif une poudre de kaolin (diamètre moyen des particules 2 um) en quantité de 12 % par rapport à la teneur en matières sèches de la dispersion.

La poudre ainsi préparée présente une excellente résistance à l'agglomération sous l'effet du poids et de la température. Elle est facilement redispersable dans l'eau par simple agitation.

La poudre est testée dans une formulation mortier-colle ayant la composition suivante :

| | parties |
|---|---|
| Poudre polymère | 50 |
| Ciment CPA 55 | 380 |
| Sable F 15 | 480 |
| Silice S1 | 115 |
| Dérivé cellulosique | 5,5 |
| Eau | 270 |

On mesure l'adhesion suivant le Guide Technique UEAtc pour l'Agrément des colles pour revêtements ceramiques (Mars 1990).

Les résultats ci-après sont donnés en comparaison avec une poudre polymère ne contenant pas de silicone.

| | Force d'arrachage daN/cm² | |
|---|---|---|
| | 7j. sec | 7J.sec + 7j. humide |
| Exemple 1 | 20 | 7 |
| Temoin | 21 | 5 |

### Exemple 2

On prépare une poudre selon les conditions opératoires de l'exemple 1 à la différence que, comme silicone, on utilise 2,5 % de methylsiliconate de potassium apporté sous forme d'une solution aqueuse à 40 % d'extrait sec.

Les résultats d'adhesion du mortier-colle sont les suivants :

| | Force d'arrachage daN/cm² | |
|---|---|---|
| | 7j. sec | 7j.sec + 7j. humide |
| Exemple 1 | 23 | 8 |
| Temoin | 19 | 5 |

### Exemple 3 :

On prépare une poudre selon les conditions de l'exemple 1 avec addition, comme silicone, de 3 % d'huile dimethylpolysiloxane et 1,5 % de methylsiliconate de potassium apporté sous forme d'une solution à 40 % d'extrait sec.

Les résultats d'adhesion du mortier-colle sont les suivants :

| | Force d'arrachage daN/cm² | | |
|---|---|---|---|
| | 7j.sec | 7j.sec +7j.humide | 7j.sec +21j.humide |
| Exemple 3 | 23 | 10 | 9 |
| Temoin | 21 | 5 | 4 |

## Revendications

1. Utilisation d'au moins une silicone dans une composition pulvérulente dispersable de polymère filmogène vinylique et/ou acrylique insoluble dans l'eau à raison de 0,5 à 20 parties en poids de silicone pour 100 parties en poids du polymère filmogène pour améliorer l'adhérence après durcissement et en conditionnement humide des formulations de liants hydrauliques comprenant ladite composition pulvérulente.

2. Utilisation selon la revendication 1, caractérisée en ce que le polymère filmogène est choisi parmi les homo- et copolymères dérivés des esters vinyliques, des acrylates et méthacrylates d'alkyle et des monomères vinylaromatiques.

3. Utilisation selon la revendication 2, caractérisée en ce que le polymère est un homo- ou un copolymère d'acétate de vinyle.

4. Utilisation selon la revendication 2, caractérisée en ce que le polymère est un homo- ou un copolymère d'acrylate ou de méthacrylate d'alkyle.

5. Utilisation selon l'une quelconque des revendications précédentes, caractérisée en ce que la silicone est choisie parmi les organosilicates alcalins ou alcalino-terreux et les polyorganosiloxanes liquides à température ambiante et leurs mélanges.

6. Utilisation selon l'une quelconque des revendications précédentes, caractérisée en ce que la composition pulvérulente est obtenue par pulvérisation-séchage d'une dispersion du polymère filmogène comprenant, avant pulvérisation, 0,5 à 20 parties en poids d'au moins une silicone pour 100 parties en poids du polymère filmogène dispersé.

## Claims

1. Use of at least one silicone in a dispersible pulverulent composition of a water-insoluble film-forming vinyl and/or acrylic polymer, in a proportion of 0.5 to 20 parts by weight of silicone per 100 parts by weight of the film-forming polymer, for improving the adhesion after hardening and under wet conditioning of hydraulic binder formulations comprising the said pulverulent composition.

2. Use according to Claim 1, characterized in that the film-forming polymer is chosen from among the homopolymers and copolymers derived from vinyl esters, alkyl acrylates, alkyl methacrylates and vinylaromatic monomers.

3. Use according to Claim 2, characterized in that the polymer is a vinyl acetate homopolymer or copolymer.

4. Use according to Claim 2, characterized in that the polymer is an alkyl acrylate or alkyl methacrylate homopolymer or copolymer.

5. Use according to any one of the preceding claims, characterized in that the silicone is chosen from among the alkali metal or alkaline-earth metal organosilicates and the polyorganosiloxanes which are liquid at ambient temperature, and their mixtures.

6. Use according to any one of the preceding claims, characterized in that the pulverulent composition is obtained by spray drying a dispersion of the film-forming polymer comprising, before spraying, 0.5 to 20 parts by weight of at least one silicone per 100 parts by weight of the dispersed film-forming polymer.

## Patentansprüche

1. Verwendung mindestens eines Silicons in einer pulverförmigen dispergierbaren Zusammensetzung aus filmbildenden in Wasser unlöslichen Vinyl- und/oder Acrylpolymeren in einer Menge von 0,5 bis 20 Gew.-Teilen Silicon auf 100 Gew.-Teile des filmbildenden Polymeren zum Verbessern des Haftvermögens nach der Aushärtung und der feuchten Konditionicrung von Formulierungen hydraulicher Bindemittel, die die genannte pulverförmige Zusammensetzung enthalten.

2. Verwendung nach Anspruch 1, dadurch gekennzeichnet, daß das filmbildende Polymere aus den Homo- und Copolymeren gewählt ist, die von Vinylestern, Alkylacrylaten und -methacrylaten und vinylaromatischen Monomeren abgeleitet sind.

3. Verwendung nach Anspruch 2, dadurch gekennzeichnet, daß das Polymere ein Homo- oder ein Copolymeres von Vinylacetat ist.

4. Verwendung nach Anspruch 2, dadurch gekennzeichnet, daß das Polymere ein Homo- oder ein Copolymeres von Alkylacrylat oder methacrylat ist.

5. Verwendung nach irgendeinem der vorangehenden Ansprüche, dadurch gekennzeichnet, daß das Silicon aus den Alkali- oder Erdalkaliorganosilicaten und den bei Umgebungstemperatur flüssigen Organopolysiloxanen und deren Mischungen gewählt ist.

6. Verwendung nach irgendeinem der vorangehenden Ansprüche, dadurch gekennzeichnet, daß die pulverförmige Zusammensetzung durch Pulverisierung-Trocknung einer Dispersion des filmbildenden Polymeren hergestellt wird, die vor der Pulverisierung 0,5 bis 20 Gew.-Teile mindestens eines Silicons auf 100 Gew.-Teile des filmbildenden dispergierten Polymeren enthält.
